Europäisches Patentamt

European Patent Office

Office européen des brevets

(19)

(11) Numéro de publication : **0 305 435 B1**

(12) **FASCICULE DE BREVET EUROPEEN**

(45) Date de publication du fascicule du brevet :
01.04.92 Bulletin 92/14

(51) Int. Cl.$^5$ : **G01N 21/72**

(21) Numéro de dépôt : **88902151.5**

(22) Date de dépôt : **25.02.88**

(86) Numéro de dépôt international :
**PCT/FR88/00105**

(87) Numéro de publication internationale :
**WO 88/06727 07.09.88 Gazette 88/20**

(54) **APPAREIL PORTATIF ET AUTONOME POUR L'ANALYSE D'UNE COMPOSITION GAZEUSE PAR SPECTROPHOTOMETRIE DE FLAMME.**

(30) Priorité : **02.03.87 FR 8702762**

(43) Date de publication de la demande :
**08.03.89 Bulletin 89/10**

(45) Mention de la délivrance du brevet :
**01.04.92 Bulletin 92/14**

(84) Etats contractants désignés :
**CH DE FR GB IT LI SE**

(56) Documents cités :
**FR-A- 1 126 890**
**GB-A- 1 034 767**
**US-A- 3 428 401**
**US-A- 3 877 819**
**US-A- 4 099 883**

(56) Documents cités :
**Instruments and Experimental Techniques, vol. 28, no. 2, partie 2, mars-avril 1985, Plenum Publishing Corp. (New York, US), G.F. Kobzenko et al.: "An independent hydrogen source", pages 499-500**
**Paten Abstracts of Japan, vol. 10, no. 33, (M-452)(2090), 8 février 1986 & JP A 60188697**
**Patent Abstracts of Japan, vol. 9, no. 117, (M-381)(1840), 22 mai 1985 & JP A 604697**

(73) Titulaire : **PROENGIN S.A.**
**3, rue de l'Industrie**
**F-78210 Saint-Cyr-l'Ecole (FR)**

(72) Inventeur : **CLAUSIN, Pierre**
**16, rue de Marnes**
**F-92410 Ville-d'Avray (FR)**
Inventeur : **BLEUSE, Patrick**
**13, rue de Vizin Beaudignies**
**F-59530 Le Quesnoy (FR)**
Inventeur : **GUENE, Gilles**
**Les Nouveaux Horizons**
**F-78990 Elancourt (FR)**

(74) Mandataire : **Marquer, Francis et al**
**Cabinet Moutard 35, Avenue Victor Hugo**
**F-78960 Voisins le Bretonneux (FR)**

EP 0 305 435 B1

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un appareil d'analyse d'une composition gazeuse par spectrophotométrie de flamme.

Elle a plus particulièrement pour objet, mais non exclusivement, la réalisation d'un appareil portatif de ce genre qui permette la mesure instantanée, avec lecture directe, de la teneur d'éléments gazeux contenus dans l'air ambiant, par exemple d'éléments polluants ou même de gaz de combat.

D'une manière générale, on sait que la spectrophotométrie de flamme est une méthode consistant à effectuer une analyse spectrographique du rayonnement produit par la flamme d'un mélange gazeux incluant les éléments à analyser. Cette analyse peut être effectuée en isolant les radiations caractéristiques des éléments recherchés et en effectuant la mesure, par voie photométrique, de l'intensité de ces radiations. Grâce à un étalonnage préalable de l'appareil sur des compositions gazeuses de concentration connue, il devient possible d'obtenir la teneur en élément recherché d'un mélange gazeux, directement à partir de cette mesure d'intensité.

Ainsi, dans le cas de l'analyse de l'air ambiant, la flamme est habituellement obtenue par la combustion, à l'intérieur d'un brûleur, d'un courant d'hydrogène à débit constant dans le flux d'air à analyser. Une telle méthode se trouve notamment décrite dans le brevet US 4 099 883.

L'invention a plus particulièrement pour but la réalisation d'un appareil d'analyse portatif autonome, et cependant de haute précision, basé sur cette méthode.

Or, en raison de la nature des éléments qu'elle fait intervenir et, en particulier, de la source d'hydrogène, des moyens de régulation de débit qui lui sont associés, du brûleur, de l'optique utilisée pour l'analyse spectrographique, des circuits de mesure optoélectroniques et de la source d'énergie électrique nécessaire au fonctionnement de l'ensemble, une telle réalisation paraît a priori difficilement concevable.

En vue de résoudre ce problème, l'invention propose tout d'abord d'utiliser, pour la production d'hydrogène, un accumulateur d'hydrogène du type de celui qui est décrit dans le document Instruments and Experimental Techniques 28 (1985) Mar-Apr, No 2, Part 2, dans lequel le dégagement d'hydrogène est obtenu par le chauffage d'éléments tels que des granulés de lanthane-nickel imprégnés d'hydrogène et contenus dans une cartouche interchangeable de faible volume.

Cette solution qui permet de résoudre les problèmes d'encombrement et de poids de la source d'hydrogène implique, par contre, pour chauffer les granulés de lanthane à la température prescrite, une consommation d'énergie électrique relativement élevée nécessitant, pour conserver une autonomie suffisante, des sources d'énergie électrique relativement volumineuses et lourdes. Autrement dit, l'avantage obtenu par l'adoption du générateur d'hydrogène précité se trouve compensé par l'encombrement de la source électrique qu'il nécessite.

Or, il s'avère que le débit d'hydrogène qui est nécessaire pour assurer le fonctionnement du dispositif d'analyse est relativement faible et n'exige pas un chauffage continu, à puissance constante, du générateur d'hydrogène.

Sur la base de cette constatation, l'invention propose un appareil portatif autonome pour l'analyse d'une composition gazeuse par spectrophotométrie de flamme, cet appareil comprenant, en conséquence, à l'intérieur d'un boîtier muni d'un organe de préhension, des moyens permettant d'effectuer une analyse spectrographique du rayonnement produit par une flamme obtenue par la combustion d'un courant d'hydrogène à débit constant dans un flux d'air à analyser, cette combustion étant produite dans un brûleur (220) comprenant une fenêtre dans l'axe de laquelle est disposé un dispositif de spectrométrie de flamme incluant successivement :

– une optique focalisatrice du rayonnement lumineux émis par la flamme qui se développe à l'intérieur du brûleur,

– un hacheur faisant intervenir une pluralité de filtres optiques, à raison d'au moins un par raie spectrale caractéristique de l'élément recherché, ainsi que des moyens permettant de placer successivement lesdits filtres dans le faisceau lumineux précédemment focalisé,

– une cellule optoélectronique de détection placée dans la zone de focalisation de l'optique focalisatrice,

– un ensemble de démodulation du signal électrique délivré par ladite cellule, cet ensemble comprenant, pour chacune desdites raies et, en conséquence, pour chacun desdits filtres, un démodulateur-séparateur piloté en synchronisme avec le hacheur de manière à n'être rendu actif que lorsque le faisceau lumineux issu de l'optique focalisatrice traverse un filtre correspondant, et

– des moyens d'amplification et d'affichage du signal électrique délivré par les susdits démodulateurs-séparateurs.

Selon l'invention, cet appareil est caractérisé en ce que le susdit courant d'hydrogène est obtenu au moyen d'un générateur d'hydrogène amovible consistant en un accumulateur d'hydrogène de type dans lequel le dégagement d'hydrogène est obtenu par le chauffage à l'aide de moyens de chauffage d'éléments imprégnés d'hydrogène et contenus dans une cartouche interchangeable de faible volume, en ce que cette cartouche est connectée au brûleur par l'intermédiaire d'un circuit d'alimentation incluant un dispositif de régulation de débit à débit constant, et en ce qu'il comprend des moyens permettant d'asservir la puissance de chauffage de l'accumulateur d'hydrogène à la pression d'hydrogène régnant en amont dudit dispositif de régulation de débit.

Dans un tel appareil, la partie du circuit d'hydrogène située en amont de ce régulateur constitue un volume tampon dans lequel la pression d'hydrogène peut varier au-dessus d'une valeur de seuil dans une plage de pression appropriée à celle requise par le régulateur pour maintenir constant le débit d'hydrogène. L'asservissement utilisé aura alors pour rôle de maintenir la pression d'hydrogène régnant à l'intérieur dudit volume, dans ladite plage de pression et ce, en réglant, de façon continue ou discontinue, la puissance électrique appliquée au dispositif de chauffage.

Avantageusement, le dispositif de régulation de débit pourra comprendre, en série, un détendeur à membrane et un régulateur de débit. Dans ce cas, la détection de pression pourra être effectuée par la détection de la position de la membrane du détendeur.

Selon un mode d'exécution avantageux de l'invention, le susdit dispositif de régulation de débit comporte un corps creux, de préférence cylindrique, comprenant deux orifices opposés coaxiaux, à savoir un orifice d'accès destiné à être raccordé à l'accumulateur d'hydrogène et un orifice de sortie relié au brûleur et une cloison interne, perpendiculaire à l'axe desdits orifices, qui délimite, à l'intérieur du corps, deux chambres dont l'une, située du côté de l'orifice d'accès, constitue la chambre du détendeur, et l'autre, située du côté de l'orifice de sortie, constitue la chambre du régulateur de débit, la communication entre ces deux chambres s'effectuant grâce à un perçage prévu dans la cloison, coaxialement auxdits orifices.

L'orifice d'accès est équipé d'un pointeau muni d'un canal axial et dont la tête qui vient en saillie, à l'intérieur de la chambre du régulateur, coopère avec un clapet porté par une structure de support solidaire d'une membrane élastiquement déformable qui est montée de façon étanche sur le corps et sur le pointeau et s'étend dans un plan perpendiculaire à l'axe desdits orifices en divisant la chambre du régulateur en deux cavités hermétiquement isolées l'une de l'autre et dont la première communique avec l'atmosphère et la seconde, alimentée en hydrogène par le canal du pointeau, communique avec la chambre du régulateur de débit par le perçage de la susdite cloison. Ainsi, sous l'effet de la pression d'hydrogène injectée dans la deuxième cavité, la membrane se déforme en tendant à appliquer le clapet sur la tête du pointeau et, en conséquence, à obturer le canal.

D'une façon analogue, le susdit orifice de sortie est équipé d'un pointeau muni d'un canal axial dont la tête coopère avec un clapet porté par une membrane élastiquement déformable qui divise la chambre de régulation en deux cavités hermétiquement isolées l'une de l'autre, dont l'une communique avec le perçage central de la susdite cloison et l'autre est en communication avec le canal du pointeau de sortie. La communication entre ces deux cavités est alors assurée par un élément déprimogène constitué, de préférence, par un capillaire passant au travers de la membrane et dont au moins une partie s'étend radialement dans l'une des deux cavités.

Selon une caractéristique particulièrement avantageuse de la structure du régulateur précédemment décrit, la position axiale des deux susdits pointeaux peut être réglée par exemple grâce à des moyens de vissage prévus dans les susdits orifices d'admission et de sortie. On dispose ainsi de moyens de réglage particulièrement simples et facilement accessibles du débit d'hydrogène.

Comme précédemment mentionné, le dispositif d'analyse selon l'invention fait intervenir un brûleur alimenté par un flux d'hydrogène à débit constant issu du régulateur de débit et un flux d'air à analyser prélevé au moyen d'un circulateur. Ce brûleur comprend une fenêtre dans l'axe de laquelle est disposé le dispositif de spectrophotométrie de flamme qui fait intervenir successivement :

- une optique focalisatrice du rayonnement lumineux émis par la flamme qui se développe à l'intérieur du brûleur,
- un hacheur faisant intervenir une pluralité de filtres optiques, à raison d'au moins un par raie spectrale caractéristique de l'élément recherché, ainsi que des moyens permettant de placer successivement lesdits filtres dans le faisceau lumineux précédemment focalisé,
- une cellule optoélectronique placée dans la zone de focalisation de l'optique focalisatrice,
- un ensemble de démodulation du signal électrique délivré par ladite cellule, cet ensemble comprenant pour chacune desdites raies et, en conséquence, pour chacun desdits filtres, un démodulateur-séparateur piloté en synchronisme avec le hacheur de manière à n'être rendu actif que lorsque le faisceau lumineux issu de l'optique focalisatrice traverse un filtre correspondant, et
- des moyens d'amplification et d'affichage du signal électrique délivré par lesdits démodulateurs-séparateurs.

Des modes d'exécution de l'invention seront décrits ci-après, à titre d'exemples non limitatifs, avec référence aux dessins annexés, dans lesquels :

La figure 1 est un schéma de principe d'un dispositif d'analyse selon l'invention ;

La figure 2 est une coupe axiale d'une cartouche de lanthane-nickel utilisable dans le dispositif selon l'invention ;

La figure 3 montre un exemple d'éxécution d'un circuit de chauffage utilisable pour chauffer une cartouche de lanthane-nickel servant à la production d'hydrogène dans un dispositif tel que celui représenté figure 1 ;

La figure 4 montre un mode d'exécution préféré d'un circuit de détection utilisant une photodiode placée dans la zone de focalisation de l'optique focalisatrice ;

La figure 5 est une coupe axiale d'un dispositif de régulation de débit ;

La figure 6 est une vue schématique du brûleur et de l'optique qui lui est associée ;

La figure 7 est une représentation schématique du montage optoélectronique associé au brûleur ;

La figure 8 représente schématiquement un mode d'exécution du circuit d'allumage du brûleur ;

La figure 9 est une coupe axiale d'un brûleur selon un mode d'exécution particulièrement avantageux de l'invention ;

La figure 10 est une vue schématique, en perspective, d'un organe d'allumage par thermocatalyse utilisable dans le brûleur représenté sur la figure 9 :

La figure 11 représente un mode d'implantation des circuits électriques associés à un organe d'allumage à arc électrique utilisable dans le brûleur représenté sur la figure 9.

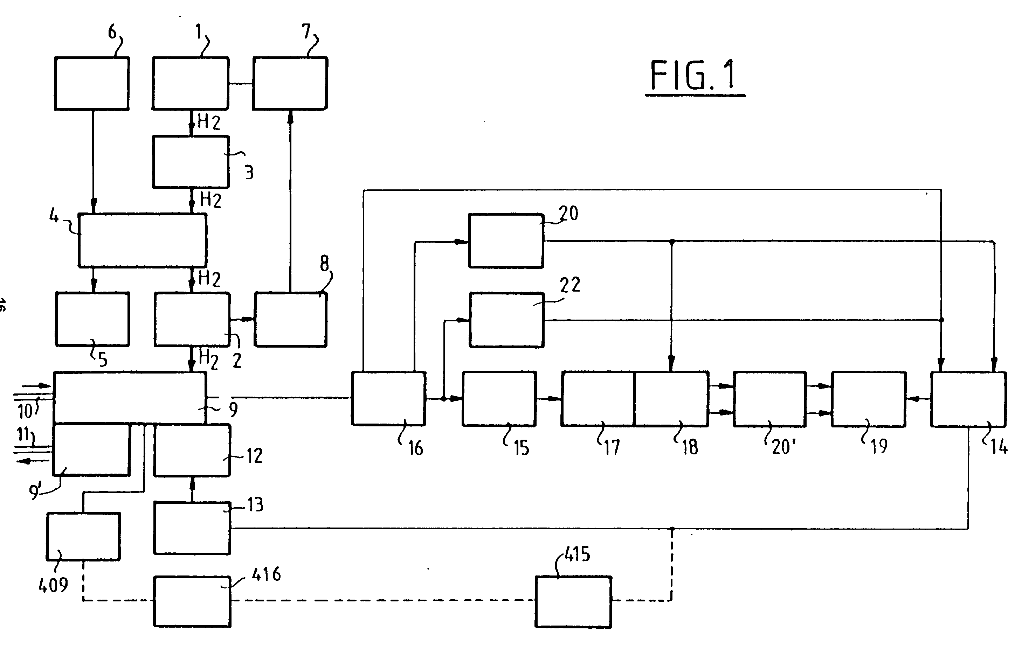

Dans l'exemple représenté sur la figure 1, le bloc 1 correspond à l'accumulateur d'hydrogène qui, comme précédemment indiqué, se présente sous la forme d'une cartouche amovible de petites dimensions renfermant des granulés de lanthane-nickel servant au stockage de l'hydrogène. Cet accumulateur d'hydrogène est couplé à un dispositif de régulation de débit 2, de préférence coaxial, par l'intermédiaire d'un dispositif de couplage (bloc 3) associé à un dispositif de commande (bloc 4) qui contrôle à la fois l'alimentation en hydrogène du dispositif de régulation de débit et l'alimentation en courant électrique (bloc 5) de l'ensemble du dispositif d'analyse à partir d'une source (bloc 6), par exemple une batterie de piles ou d'accumulateurs.

Le chauffage de la cartouche de l'accumulateur d'hydrogène est assuré par des moyens de chauffage (bloc 7) dont la puissance de chauffage est régulée par un détecteur de pression (bloc 8) associé au dispositif de régulation de débit 2.

A la sortie du dispositif de régulation de débit 2, l'hydrogène est injecté dans un brûleur 9 dans lequel circule un courant d'air grâce à un circuit d'aspiration d'air 10 et un circuit de refoulement d'air 11. Ce brûleur est équipé d'un dispositif optique de traitement du rayonnement lumineux émis par la flamme résultant de la combustion de l'hydrogène à l'intérieur du brûleur et un dispositif apte à assurer l'amorçage et l'entretien de la flamme (bloc 12). Ce dispositif est commandé par un circuit d'amorçage (bloc 13), associé à un circuit logique de commande (bloc 14), en fonction de la présence et de la luminosité de la flamme.

La circulation d'air à l'intérieur du brûleur pourra avantageusement être assurée au moyen d'un circulateur (bloc 9') monté directement sur le corps du brûleur 9 et pour éviter ainsi l'utilisation d'un conduit de liaison pouvant être le siège de condensats. Avantageusement, ce circulateur pourra être asservi en fonction de l'intensité du rayonnement ultraviolet détecté par la cellule. En outre, un détecteur, par exemple de débit, apte à détecter les défauts de fonctionnement de ce circulateur pourra être prévu ainsi qu'un dispositf apte à interrompre le circuit d'amorçage et d'entretien de la flamme (bloc 12) lorsque ce détecteur émet un signal de défaut.

Le dispositif optique de traitement associé au brûleur est conçu de manière à transmettre à une cellule photoélectrique de mesure (bloc 15), le rayonnement lumineux émis par la flamme, par l'intermédiaire d'un dispositif de hachage et de filtrage sélectif de ce rayonnement (bloc 16). Comme précédemment mentionné, ce dispositif de hachage comprend une pluralité de filtres optiques, à raison d'au moins un par raie spectrale recherchée, qui sont successivement placés dans le faisceau lumineux produit par le dispositif optique de traitement.

Le signal électrique produit par la cellule 15 est ensuite transmis à un ensemble de démodulation 17 comprenant pour chacune des raies spectrales recherchées, un démodulateur et un filtre approprié 18. Cet ensemble de démodulation 17 est piloté par un dispositif de décodage 20 permettant d'affecter à chaque couple démodulateur/filtre le signal délivré par la cellule 15 lors du filtrage du faisceau lumineux par un filtre correspondant.

Les filtres 18 de l'ensemble de démodulation sont connectés par leurs sorties respectives à un dispositif d'affichage 19, par l'intermédiaire d'un convertisseur 20'. Ce dispositif d'affichage est lui-même piloté par le circuit logique de commande 14. Avantageusement, ce dispositif d'affichage pourra être complété ou remplacé par un système de signalisation émettant un signal lumineux ou sonore à amplitude et/ou fréquence variable.

Outre les filtres affectés aux raies spectrales recherchées, le dispositif de hachage peut en outre comprendre un filtre ultraviolet associé à une cellule optoélectronique correspondante 22, de préférence distincte de la cellule 15. Cette cellule qui délivre un signal représentatif de la présence et de l'intensité lumineuse de la flamme est connectée au circuit logique de commande 14. Selon l'état d'éclairement de la flamme, ce circuit 14 pourra mettre en route le dispositif d'amorçage et éventuellement effectuer la correction des mesures affichées par le dispositif d'affichage 19.

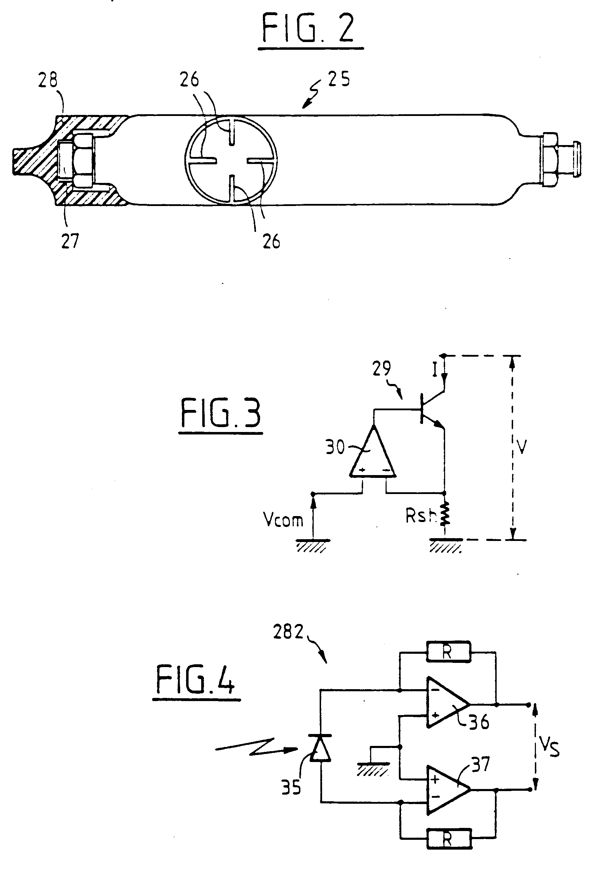

Les figures 2 à 8 sont des exemples d'exécution des principaux éléments intervenant dans le schéma précédemment décrit.

Ainsi, la figure 2 représente un mode d'exécution particulièrement avantageux d'une cartouche amovible de lanthane-nickel servant au stockage de l'hydrogène.

Il convient de noter tout d'abord à ce sujet que les cartouches de ce genre actuellement utilisées se composent d'un corps tubulaire en général cylindrique refermé d'un côté par un fond et présentant, de l'autre côté, un embout de raccordement muni d'un clapet agencé de manière à être sollicité dans le sens de l'ouverture lors du raccordement, une fois que ce raccordement a été effectué. Ce corps tubulaire sert à renfermer le lanthane-nickel qui se présente sous la forme d'une poudre, et est chauffé par des moyens extérieurs en vue d'assurer la production d'hydrogène requise.

Il s'avère que ces cartouches présentent un certain nombre d'inconvénients.

En raison de sa faible conductibilité, la poudre de lanthane-nickel met un temps relativement long à s'échauffer sous l'effet de la chaleur dégagée par le corps, lors de la mise en service des moyens de chauffage. Il s'ensuit un temps de réponse relativement long et une qualité médiocre de l'asservissement des moyens de chauffage.

Par ailleurs, lors des manipulations, la poudre subit fréquemment des tassements et forme, à l'intérieur du corps, un conglomérat qui, lors de son imprégnation par l'hydrogène, subit un gonflement qui produit sur le corps des contraintes élevées allant jusqu'à le déformer.

Un autre inconvénient de ces cartouches consiste en ce que, lorsqu'il se produit une obturation accidentelle du circuit d'hydrogène, au cours d'une phase de chauffage de la cartouche, il se produit une élévation importante de la pression d'hydrogène créant un risque d'explosion.

La solution illustrée sur la figure 2 permet d'éliminer tous ces inconvénients.

Elle fait intervenir un corps 25 muni d'une pluralité d'ailettes radiales 26 (vues en section droite) qui s'étendent axialement dans le volume intérieur du corps 25 sensiblement sur toute sa longueur. Ces ailettes 26 permettent donc d'effectuer un meilleur transfert thermique entre le corps et la poudre, d'obtenir une meilleure homogénéité du chauffage, et d'assurer une répartition homogène de la poudre empêchant la formation d'un conglomérat.

En outre, le fond de la cartouche comprend un orifice obturé par un opercule 27 (tel que, par exemple, un disque de rupture) qui s'éjecte lorsque la pression à l'intérieur de la cartouche s'élève au-delà d'un seuil prédéterminé.

Il est clair que lors d'une telle éjection, la pression à l'intérieur de la cartouche va brutalement s'abaisser et, parallèlement, la poudre de lanthane-nickel qui subit un refroidissement, va cesser sa production d'hydrogène.

L'obturateur peut être protégé par un capot 28 formant poignée qui peut, par exemple, servir à assurer un mouvement de rotation de la cartouche lors de sa connexion à l'appareil.

Le chauffage de la cartouche précédemment décrite peut être assuré de façon classique à l'aide d'un réseau de résistances chauffantes dont l'alimentation est contrôlée par un interrupteur. Toutefois, cette solution ne permet pas d'obtenir une commande proportionnelle du chauffage et de s'adapter à une large gamme de tensions d'alimentation (une telle adaptation nécessiterait l'emploi d'une multiplicité de résistances correspondant chacune à un niveau de tension).

C'est la raison pour laquelle l'invention propose d'utiliser, en vue d'effectuer ce chauffage, des composants actifs tels que des transistors CMS dont la puissance de chauffage P peut être commandée par une tension de commande, par exemple grâce au circuit représenté sur la figure 3.

Dans ce circuit, la jonction collecteur-émetteur du transistor 29 est connectée à une source de tension V par l'intermédiaire d'une résistance de shunt Rsh, en série dans le circuit émetteur. La base de ce transistor 29 est connectée à la sortie d'un amplificateur opérationnel 30, dont l'entrée inverseuse est reliée à l'émetteur du transistor 29 et dont l'entrée directe reçoit une tension de commande Vcom. La puissance P dissipée par le transistor est alors de la forme :

$$P = VI = \frac{V \times Vcom}{Rsh}$$

Le dispositif de raccord précédemment décrit est connecté à un dispositif de régulation de débit faisant intervenir, en série, un détendeur et un régulateur de débit proprement dits.

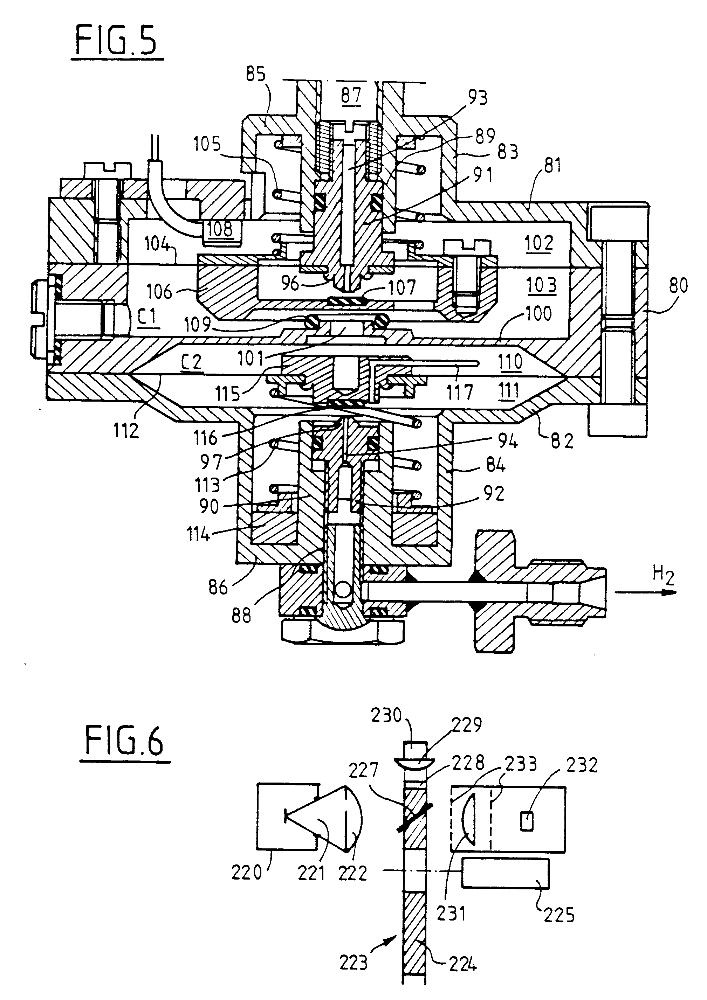

La figure 5 représente un mode d'exécution particulièrement avantageux d'un tel dispositif dans lequel le détendeur et le régulateur de débit sont incorporés dans un même boîtier.

Dans cet exemple, le boîtier présente un corps tubulaire 80 de section cylindrique refermé par deux carters opposés 81, 82 présentant chacun coaxialement audit corps 80 un bossage cylindrique 83, 84 dont le fond 85, 86 est muni d'un orifice coaxial 87, 88 et d'un manchon cylindrique 89, 90 qui entoure ledit orifice 87, 88 et s'étend vers l'intérieur du boîtier.

Le manchon 89 est destiné à être connecté au dispositif de raccord, tandis que le manchon 90 est prévu pour être raccordé au brûleur. Dans chacun de ces manchons 89, 90 est monté un pointeau 91, 92 axialement réglable en position et muni d'un canal axial 93, 94 assurant le passage de l'hydrogène. Par ailleurs, ces deux pointeaux 91, 92 comprennent chacun une tête 96, 97 orientée vers l'intérieur du boîtier et dépassant de l'extrémité-intérieure du manchon correspondant 89, 90.

Le corps 80 comporte une cloison radiale 100 qui divise le volume interne du boîtier en deux compartiments C1, C2 qui communiquent l'un avec l'autre grâce à un perçage central 101 prévu dans la cloison 100.

Le compartiment C1 est lui-même divisé en deux chambres 102, 103 par une membrane souple circulaire 104 dont la bordure périphérique est serrée entre le carter 81 et le corps 80 au niveau de la jonction entre ces deux pièces et réalise donc l'étanchéité de cette jonction, et dont la partie centrale est solidarisée, avec étanchéité, à la tête 96 du pointeau 91. Cette membrane 104 est sollicitée par un ressort 105 qui s'engage dans le volume intercalaire compris entre le manchon 89 et la paroi cylindrique du bossage 83 pour venir en appui contre le fond 85. Elle porte une pièce de support 106 qui s'étend dans la chambre 102 et est munie d'une garniture d'étanchéité 107 destinée à coopérer avec la tête 96 du pointeau 91 à la manière d'un clapet.

Le fonctionnement de ce détendeur est alors le suivant :

– lorsque la pression d'hydrogène dans la chambre 103 est nulle, la membrane 104 qui est poussée par le ressort 105, écarte la garniture 107 de la tête 96 du pointeau 91, de sorte que l'hydrogène arrivant par le canal 93 peut pénétrer librement dans la chambre 103 ;

– lorsque la pression à l'intérieur de cette chambre 103 s'élève, la membrane 104 tend à se soulever contre l'action du ressort 105 jusqu'à ce qu'à partir d'une pression déterminée la garniture d'étanchéité 107 vienne s'appliquer sur la tête 96 en obturant le canal 93.

Les déplacements de la membrane 104 qui sont représentatifs de la pression qui règne dans la chambre 103 (la chambre 102 communiquant avec l'atmosphère) sont détectés par un détecteur de distance 108 monté dans la chambre 102, ce détecteur 108 servant à piloter la puissance de chauffe de l'accumulateur d'hydrogène.

La pièce de support 106 comprend en outre, du côté opposé à la garniture d'étanchéité 107, une surface plane destinée à coopérer avec un joint torique 109, à la manière d'un clapet, pour fermer l'orifice 101 lorsque la pression à l'intérieur de la chambre 103 descend au-dessous d'un seuil prédéterminé. Cette disposition permet ainsi d'éviter toute remontée d'air dans le circuit d'hydrogène depuis le brûleur.

Le compartiment C2 est également divisé en deux chambres 110, 111 par une membrane souple circulaire 112 dont la bordure périphérique est serrée entre le corps 80 et le carter 82, au niveau de la jonction de ces deux pièces, et réalise donc l'étanchéité de cette jonction.

Cette membrane 112 est sollicitée par un ressort 113 qui s'engage dans le volume intercalaire compris entre le manchon 90 et la paroi cylindrique du bossage 84 pour venir ensuite porter sur une pièce de support 114 dont l'épaisseur est variable en fonction de la température, qui repose sur le fond 86, cette pièce 114 assurant ainsi une compensation en température de l'action du ressort 113.

La membrane 112 comprend, dans sa partie centrale, une pièce rigide 115 portant une garniture d'étanchéité 116 destinée à coopérer avec la tête 97 du pointeau 92 à la façon d'un clapet de manière à obturer au moins partiellement le canal 94 en fonction du différentiel de pression existant entre les deux chambres 110, 111 et à assurer ainsi le rôle de régulateur de débit. A cet effet, les deux chambres 110, 111 communiquent entre elles par l'intermédiaire d'un élément déprimogène qui consiste, dans cet exemple, en un élément capillaire 117 qui traverse la pièce 115 et qui s'étend radialement dans la chambre 110, la longueur de cet élément étant ajustée au débit que l'on veut obtenir. Il est clair que grâce à cette structure, la charge imposée par le clapet (garniture 116-tête 97) variera en fonction du différentiel de pression (chambre 110/chambre 111) pour effectuer une régulation à débit constant du flux d'hydrogène circulant dans le canal 94.

La figure 6 représente schématiquement un brûleur utilisable dans le dispositif d'analyse selon l'invention ainsi que l'optique qui lui est associée.

Ce brûleur comprend plus particulièrement une chambre de combustion 220, par exemple cylindrique, dans laquelle sont injectés un flux d'air provenant d'un dispositif de circulation non représenté et un flux d'hydrogène provenant du dispositif de régulation de débit. Cette chambre de combustion 220 présente une fenêtre 221 au droit de laquelle est disposée une lentille 222 servant à projeter à l'infini les rayons lumineux engendrés par la combustion de l'hydrogène dans l'air.

Dans le faisceau lumineux produit par la lentille 222 est interposé un hacheur constitué par un disque rotatif 223 portant dans une zone annulaire passant dans l'axe de la lentille une succession de filtres optiques 224 respectivement appropriés au spectre caractéristique des éléments recherchés. Ce disque 223 est entraîné à vitesse constante par un moteur électrique 225.

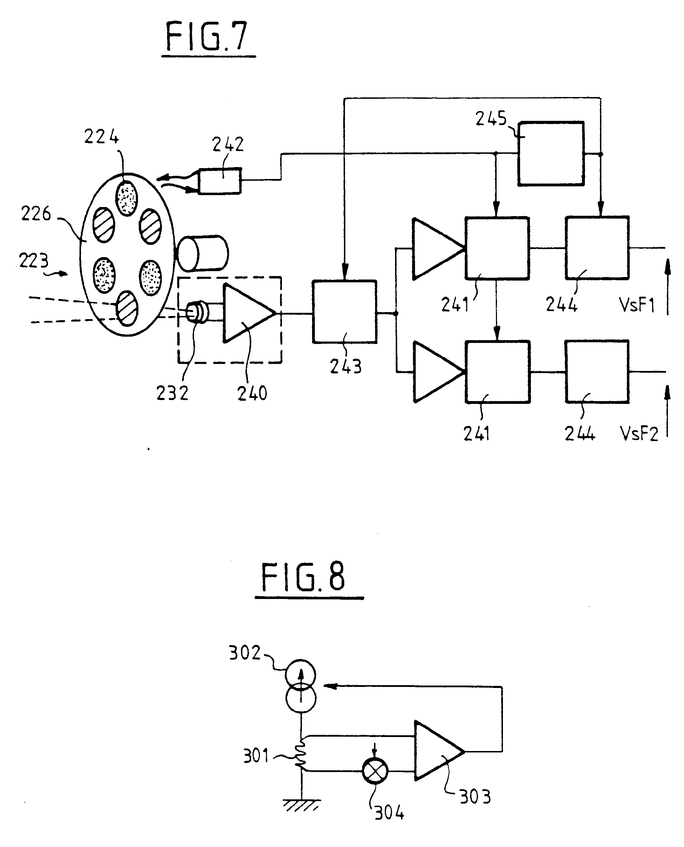

Dans la susdite zone annulaire, les filtres 224 sont séparés par des plages opaques 226 (visibles sur la figure 7) dont l'un au moins présente la surface d'un filtre et sert à obtenir un signal de référence représentatif d'une intensité lumineuse nulle et par des éléments réflecteurs 227 qui renvoient le faisceau lumineux dans le plan du disque 223 sur un système optique comprenant un filtre ultraviolet 228, une lentille focalisatrice 229 et un détecteur de rayonnement ultraviolet 230.

Par ailleurs, dans l'axe de la lentille 222 est disposé un montage optique comprenant, du côté du disque 223 opposé à ladite lentille 222, une lentille focalisatrice 231 et, sensiblement au foyer de cette lentille 231, un capteur optoélectronique 232 sensible dans la gamme des spectres de fréquence correspondant aux éléments recherchés. En outre, de part et d'autre de la lentille 231 sont disposées des grilles en matière électriquement conductrice 233 servant de filtres électrostatiques. Le rayonnement infrarouge pourra être stoppé grâce à l'utilisation d'un filtre dichroïque ou par une métallisation de la lentille 231 servant également de filtre électrostatique. Ainsi, le faisceau lumineux émis par le brûleur sera haché par les plages opaques 226 du disque 223 qui ne laissera passer en direction du capteur 232 qu'une succession cyclique de raies spectrales en relation avec les éléments recherchés en direction du détecteur 230, et une succession d'échantillons d'ondes ultraviolettes représentatifs de l'émission des radicaux OH de la flamme, c'est-à-dire de l'état de la combustion à l'intérieur du brûleur.

Avantageusement, pour chacune des raies d'émission correspondant à un élément recherché, le disque comprendra deux filtres successifs, l'un étant destiné à détecter le sommet de la raie, tandis que l'autre est destiné à détecter le pied de cette raie. La soustraction ultérieure des signaux émis par ces deux filtres permettra d'éliminer les rayonnements lumineux parasites.

Le capteur 232 pourra, quant à lui, consister en une photodiode 35 associée à un amplificateur à haut rapport $\frac{signal}{bruit}$, de préférence du type de celui représenté sur la figure 4. Selon cet amplificateur, la photodiode 35 est connectée aux deux entrées inverseuses de deux amplificateurs opérationnels respectifs 36, 37 dont les entrées directes sont reliées à la masse. Par ailleurs, l'entrée inverseuse de chacun de ces amplificateurs est reliée à sa sortie par l'intermédiaire d'une résistance R.

Grâce à ce montage, on obtient, entre les deux sorties des deux amplificateurs 36, 37, un signal de sortie Vs égal à deux fois le produit de la résistance R par le courant Iph engendré par la diode.
Le signal de bruit sera alors très inférieur à celui d'un montage classique qui n'utilise qu'un seul amplificateur opérationnel.

Comme cela est visible sur la figure 7, le capteur 232 est connecté par sa sortie à un préamplificateur 240, dont les signaux de sortie sont aiguillés respectivement sur une pluralité de démodulateurs-séparateurs 241 pilotés par un signal de synchronisation émis par un détecteur optique ou magnétique 242 associé au disque 223, ce montage étant conçu de manière à ce que chaque démodulateur 241 ne traite que le signal correspondant à un spectre déterminé, et en conséquence, à un filtre 224 ou un type de filtres déterminé du disque 223. Avantageusement, le circuit reliant le préamplificateur 240 aux démodulateurs 241 comprend un filtre passe-bande 243 piloté par le signal de synchronisation, ce filtre passe-bande 243 étant destiné à réduire le bruit du signal appliqué aux démodulateurs 241. De même, les signaux fournis par les démodulateurs 241 sont filtrés par des filtres passe-bas 244 également pilotés par le signal de synchronisation.

Ces filtres 244 sont ensuite reliés au convertisseur 20 représenté sur la figure 1 dont la sortie est connectée à l'afficheur 19.

Il convient de noter que pour optimiser le niveau de bruit, le signal issu du capteur 232 doit être filtré étroitement à des fréquences fixées par la vitesse de rotation du disque 223.

Ce filtrage entraîne un déphasage des signaux de mesure par rapport aux signaux de synchronisation.

Pour atténuer ce phénomène, il faut décaler angulairement la position du détecteur de synchronisation 242. Toutefois, les variations de vitesse de rotation du disque 223 provoquées par exemple par les déplacements de l'appareil engendrent des fluctuations du déphasage et donc des erreurs de mesure importantes, les mesures d'intensité lumineuse ne s'effectuant plus rigoureusement au moment du passage des filtres 224 devant l'optique.

Pour supprimer cet inconvénient, l'invention propose d'utiliser des filtres faisant appel à la technique du découpage capacitif qui permet d'asservir leur fréquence de coupure à celle d'une base de temps 245, celle-ci étant constituée par une boucle VCO/diviseur de fréquence synchronisée sur la vitesse de rotation du disque 223.

Comme précédemment mentionné, la combustion de l'hydrogène à l'intérieur du brûleur doit être amorcée et entretenue au moyen d'un dispositif d'amorçage. Cet amorçage peut être obtenu par thermocatalyse au moyen d'un fil de platine jouant le rôle d'une résistance chauffante alimentée en courant électrique au moyen d'un dispositif de commutation piloté par le détecteur de rayonnement ultraviolet de manière à n'être mis en oeuvre que lorsque c'est nécessaire. En outre, dans un souci d'économie d'énergie la puissance électrique appliquée à ce fil de platine peut être limitée à un minimum grâce au dispositif de régulation représenté sur la figure 8.

Selon ce dispositif, le fil de platine 301 est alimenté par un générateur de courant de type VCI 302 piloté par un signal d'écart entre la valeur de la résistance du fil de platine mesurée à ses bornes et une valeur de consigne. Dans cet exemple, cette valeur d'écart est fournie par un amplificateur opérationnel 303 dont les deux entrées sont connectées aux bornes du fil de platine et dont l'une des bornes reçoit, en outre, le signal de consigne grâce à un additionneur 304. Ce montage permet en particulier de ne faire circuler dans le fil de platine que le courant juste nécessaire pour produire l'amorçage quelles que soient les conditions environnantes.

Bien entendu, l'invention ne se limite pas à ce seul type de dispositif d'amorçage ; celui-ci pourrait tout aussi bien consister en un dispositif apte à engendrer un arc électrique dans le brûleur.

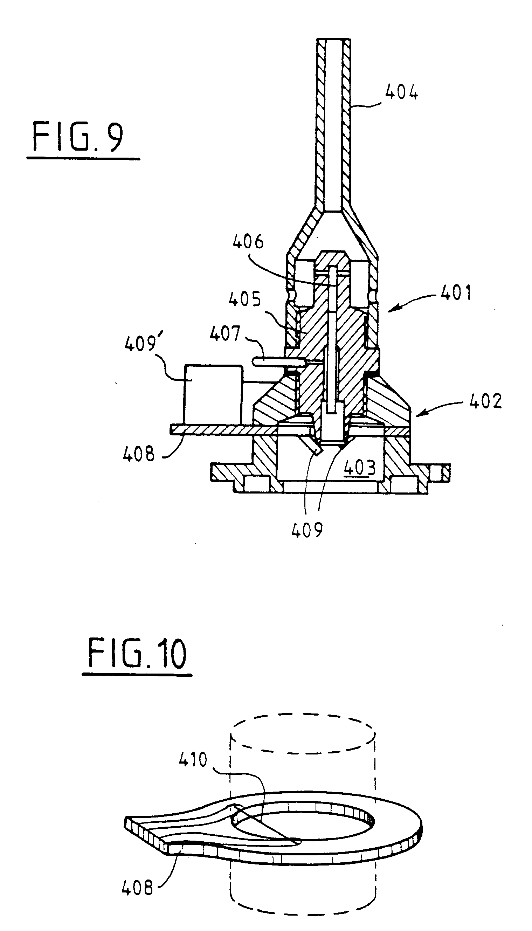

Ainsi, dans le mode d'exécution représenté sur la figure 9, le brûleur comprend un corps cylindrique en deux parties 401, 402 assemblées l'une à l'autre, à savoir une partie d'admission 401 et une partie 402 délimitant, au moins partiellement, la chambre de combustion 403.

La partie d'admission 401 se prolonge d'un côté par une buse de prélèvement 404 de l'air à analyser, qui peut être raccordée à un circulateur, et renferme, de l'autre côté, un pointeau 405, muni d'un passage d'injection axial 406, communiquant avec ladite buse 404 et dans lequel débouche le circuit d'admission d'hydrogène 407 alimenté par le régulateur de débit. L'extrémité du pointeau 405 opposée à la buse 404 vient légèrement en saillie à l'intérieur de la chambre de combustion 403 et présente une cavité servant à la fois de chambre de mélange et de chambre d'ignition du mélange d'hydrogène et d'air prélevé.

L'étanchéité au niveau de la jonction des deux parties 401, 402 du brûleur est assurée par un élément de circuit imprimé 408, partiellement en forme de couronne, qui porte deux électrodes d'allumage 409 qui s'étendent à l'intérieur de la chambre de combustion 403 et qui sont connectées à un circuit d'alimentation à haute tension 409' porté par une portion de l'élément située à l'extérieur du brûleur.

Une structure similaire à celle précédemment décrite peut être avantageusement utilisée dans le cas d'un allumage par thermocatalyse. Dans ce cas, il est possible d'utiliser, comme représenté sur la figure 10, au lieu des électrodes 409, un fil de platine 410 qui s'étend dans l'espace circulaire délimité par l'élément 408. D'une façon analogue, le circuit d'alimentation de ce fil de platine pourra être au moins partiellement porté par la partie de l'élément extérieure au brûleur.

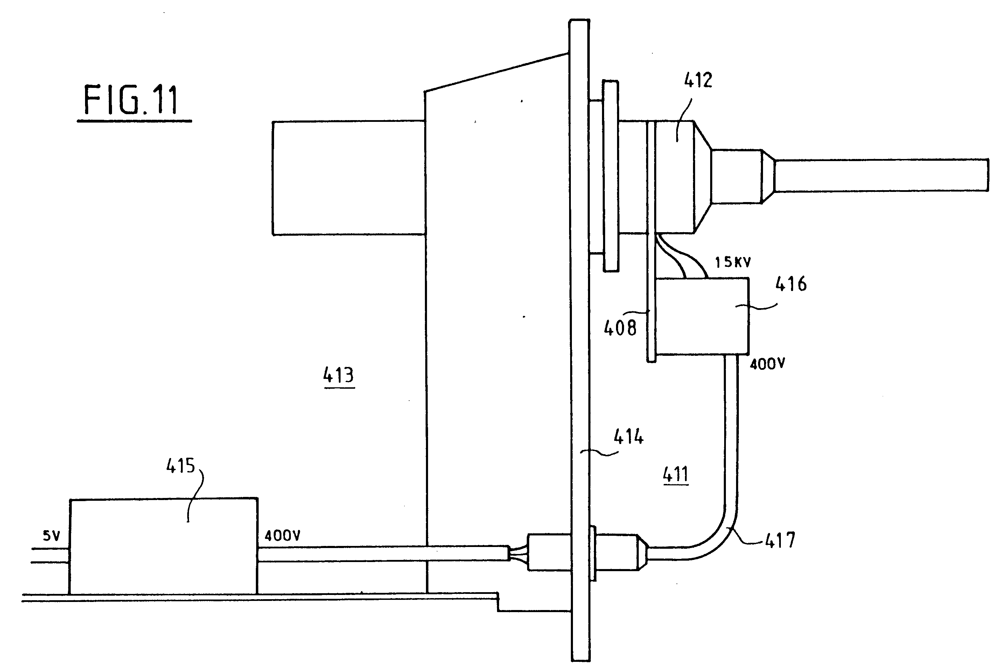

La figure 11 montre un mode d'implantation particulièrement approprié à un allumage du mélange gazeux par un arc électrique.

Dans cet exemple, la zone 411 contenant le brûleur 412 se trouve isolée de la zone 413 contenant les circuits électroniques de mesure et les capteurs optoélectroniques par une paroi 414 en un matériau électriquement conducteur formant blindage. L'alimentation du dispositif d'allumage est alors assurée par un transformateur élévateur de moyenne tension 415 situé dans la zone 413, ce transformateur 415 étant relié à une transformateur d'impulsions 416 à très haute tension monté, dans la zone 411, sur une partie de l'élément 408 extérieure au brûleur. La liaison entre le transformateur à moyenne tension 415 et le transformateur 416 est assurée par un câble 417, de préférence blindé, passant au travers de la paroi 414. Cette disposition permet, en particulier, d'éviter les perturbations que pourraient occasionner les impulsions engendrées par le transformateur 416 sur les circuits électroniques ou optoélectroniques de mesure. Un autre avantage de cette disposition consiste en ce qu'elle permet d'éviter l'usage de liaisons électriques de très haute tension ainsi que des connecteurs appropriés à ces tensions.

## Revendications

1. Appareil portatif autonome pour l'analyse d'une composition gazeuse par spectrophotométrie de flamme, cet appareil comprenant, en conséquence, à l'intérieur d'un boîtier muni d'un organe de préhension, des moyens permettant d'effectuer une analyse spectrographique du rayonnement produit par une flamme obtenue par la combustion d'un courant d'hydrogène à débit constant dans un flux d'air à analyser, cette combustion étant produite dans un brûleur (220) comprenant une fenêtre (221) dans l'axe de laquelle est disposé un dispositif de spectrométrie de flamme incluant successivement :

– une optique focalisatrice (222, 231) du rayonnement lumineux émis par la flamme qui se développe à l'intérieur du brûleur (220),

– un hacheur (223) faisant intervenir une pluralité de filtres optiques (224), à raison d'au moins un par raie spectrale caractéristique de l'élément recherché, ainsi que des moyens permettant de placer successivement lesdits filtres (224) dans le faisceau lumineux précédemment focalisé,

– une cellule optoélectronique (232) de détection placée dans la zone de focalisation de l'optique focalisatrice (222, 231),

– un ensemble de démodulation du signal électrique délivré par ladite cellule (232), cet ensemble comprenant, pour chacune desdites raies et, en conséquence, pour chacun desdits filtres, un démodulateur-séparateur (17) piloté en synchronisme avec le hacheur de manière à n'être rendu actif que lorsque le faisceau lumineux issu de l'optique focalisatrice traverse un filtre correspondant, et

– des moyens d'amplification et d'affichage (19) du signal électrique délivré par les susdits démodulateurs-séparateurs (17),

caractérisé en ce que le susdit courant d'hydrogène est obtenu au moyen d'un générateur d'hydrogène amovible consistant en un accumulateur d'hydrogène (1) de type dans lequel le dégagement d'hydrogène est obtenu par le chauffage à l'aide de moyens de chauffage (29) d'éléments imprégnés d'hydrogène et contenus dans une cartouche interchangeable de faible volume, en ce que cette cartouche est connectée au brûleur par l'intermédiaire d'un circuit d'alimentation incluant un dispositif de régulation de débit (2) à débit constant, et en ce qu'il comprend des moyens permettant d'asservir la puissance de chauffage de l'accumulateur d'hydrogène (1) à la pression d'hydrogène régnant en amont dudit dispositif de régulation de débit (2).

2. Appareil selon la revendication 1, caractérisé en ce que pour chaque raie spectrale correspondant à un élément recherché, il comprend deux filtres successifs, l'un étant destiné à détecter le pied de cette raie et l'autre servant à détecter le sommet de cette raie.

3. Appareil selon la revendication 1, caractérisé en ce que le susdit accumulateur d'hydrogène comprend un corps (25) de forme tubulaire muni d'une pluralité d'ailettes radiales (26) qui s'étendent axialement dans le volume intérieur du corps (25) renfermant le lanthane-nickel.

4. Appareil selon la revendication 3, caractérisé en ce que le susdit corps comprend un fond muni d'un opercule (27) qui s'éjecte lorsque la pression d'hydrogène à l'intérieur du corps s'élève au-delà d'un seuil prédéterminé.

5. Appareil selon la revendication 1, caractérisé en ce que les susdits moyens de chauffage consistent en des composants actifs de type CMS (29) commandés par une tension de commande.

6. Appareil selon la revendication 1, caractérisé en ce que la susdite partie du circuit d'hydrogène située en amont du régulateur de débit (9) est conformée de manière à constituer un volume tampon dans lequel la pression d'hydrogène peut varier au-dessus d'une valeur de seuil, dans une plage de pression appropriée à celle requise par le régulateur (9) pour maintenir constant le débit d'hydrogène, et en ce que les susdits moyens d'asservissement sont conçus de manière à maintenir la pression d'hydrogène régnant à l'intérieur dudit volume, dans ladite plage de pression, en réglant, de façon continue ou discontinue, la puissance électrique appliquée au dispositif de chauffage du susdit accumulateur (1).

7. Appareil selon la revendication 1, caractérisé en ce que le susdit dispositif de régulation de débit (9) comprend, en série, un détendeur à membrane et un régulateur de débit.

8. Appareil selon la revendication 7, caractérisé en ce que la pression d'hydrogène régnant dans le susdit volume est détectée au moyen d'un détecteur de position (108) de la membrane (104) du détendeur.

9. Appareil selon la revendication 1, caractérisé en ce que le susdit dispositif de régulation de débit comporte un corps creux (80), comprenant deux orifices opposés coaxiaux, à savoir, un orifice d'accès (87) destiné à être raccordé à l'accumulateur d'hydrogène (1) et un orifice de sortie (88) relié au brûleur et une cloison interne (100), perpendiculaire à l'axe desdits orifices (87, 88), qui délimite, à l'intérieur du corps, deux chambres (C1, C2) dont l'une (C1), située du côté de l'orifice d'accès (87), constitue la chambre du détendeur, et l'autre (C2), située du côté de l'orifice de sortie (88), constitue la chambre du régulateur de débit, la communication entre ces deux chambres (C1, C2) s'effectuant grâce à un perçage (101) prévu dans la cloison (100), coaxialement auxdits orifices (87, 88).

10. Appareil selon la revendication 9, caractérisé en ce que le susdit orifice d'accès (87) est équipé d'un pointeau (91) muni d'un canal axial (93) et dont la tête (96) qui vient en saillie à l'intérieur de la chambre (C1) du régulateur, coopère avec un clapet (107) porté par une structure de support solidaire d'une membrane élastiquement déformable (104) qui est montée de façon étanche sur le corps (80) et sur le pointeau (91) et s'étend dans un plan perpendiculaire à l'axe desdits orifices (87, 88) en divisant la chambre (C1) du régulateur en deux cavités (102, 103) hermétiquement isolées l'une de l'autre et dont la première (102) communique avec l'atmosphère et la seconde (103), alimentée en hydrogène par le canal (93) du pointeau (91), communique avec la chambre (C2) du régulateur de débit par le perçage (101) de la susdite cloison (100).

11. Appareil selon la revendication 10, caractérisé en ce qu'une surface d'étanchéité solidaire de la membrane (104) coopère avec une portée d'étanchéité prévue autour du perçage (101) pour fermer ce perçage lorsque la pression dans la seconde cavité (103) descend au-dessous d'un seuil prédéterminé.

12. Appareil selon la revendication 10, caractérisé en ce que le susdit orifice de sortie (88) est équipé d'un pointeau (92) muni d'un canal axial (94) et dont la tête (97) coopère avec un clapet (116) porté par une membrane (112) élastiquement déformable qui divise la chambre de régulation (C2) en deux cavités (110, 111) hermétiquement isolées l'une de l'autre, dont l'une (110) communique avec le perçage central (101) de la susdite cloison (100) et l'autre (111) est en communication avec le canal (94) du pointeau de sortie (92), et en ce que la communication entre les deux cavités (110, 111) est alors assurée par un élément déprimogène constitué par un capillaire (117) passant au travers de la membrane (112) et dont au moins une partie s'étend radialement dans l'une des deux cavités.

13. Appareil selon la revendication 12, caractérisé en ce que la position axiale des susdits pointeaux (91, 92) est réglable par vissage.

14. Appareil selon la revendication 1, caractérisé en ce que les susdits filtres (224) sont portés par un disque rotatif (223) comportant, en outre, un filtre ultraviolet (228) associé à une cellule optoélectronique correspondante (230) destinée à fournir un signal représentatif de la présence et de l'intensité lumineuse de la flamme.

15. Appareil selon la revendication 14, caractérisé en ce que le susdit filtre ultraviolet (228) est associé à un réflecteur (227) apte à renvoyer le rayonnement ultraviolet dans le plan du disque (223).

16. Appareil selon la revendication 14, caractérisé en ce qu'il comprend un dispositif d'amorçage de la flamme piloté par le susdit signal.

17. Appareil selon la revendication 16, caractérisé en ce que le susdit dispositif d'amorçage fonctionnne par thermocatalyse.

18. Appareil selon la revendication 16, caractérisé en ce que le susdit dispositif d'amorçage comprend des moyens permettant d'engendrer un arc électrique à l'intérieur du brûleur.

19. Appareil selon la revendication 1, caractérisé en ce que le hacheur (223) comprend, entre les susdits filtres optiques (224), au moins une zone opaque présentant la surface d'un filtre, cette zone servant à obtenir un signal de référence représentatif d'une intensité lumineuse nulle.

20. Appareil selon la revendication 1, caractérisé en ce que la susdite optique focalisatrice comprend au moins une lentille (231) interposée entre deux grilles (233) en matière électriquement conductrice servant de blindage électrostatique.

21. Appareil selon la revendication 20, caractérisé en ce que la susdite optique focalisatrice comprend un filtre dichroïque ou une métallisation de la lentille (231), pour stopper le rayonnement infrarouge et réaliser le susdit blindage électrostatique.

22. Appareil selon la revendication 1, caractérisé en ce que la susdite cellule photoélectrique consiste en une photodiode (35) connectée aux deux entrées inverseuses de deux amplificateurs opérationnels respectifs (36, 37), dont les entrées directes sont reliées à la masse, en ce que les entrées inverseuses de chacun de ces amplificateurs sont reliées à leur sortie par l'intermédiaire d'une résistance (R), et en ce que le signal de sortie consiste en la tension entre les deux bornes de sortie desdits amplificateurs.

23. Appareil selon la revendication 1, caractérisé en ce que le brûleur comprend un corps cylindrique en deux parties (401, 402) assemblées l'une à l'autre, avec au niveau de la jonction entre ces deux parties, un élément de circuit imprimé (408) en forme de couronne portant des moyens d'allumage qui s'étendent à l'intérieur de la chambre de combustion (403) du brûleur.

24. Appareil selon la revendication 23, caractérisé en ce que le susdit élément de circuit imprimé (408) porte au moins une partie (409') du circuit d'alimentation des susdits moyens d'allumage.

25. Appareil selon la revendication 23, caractérisé en ce que les susdits moyens d'allumage consistent en un fil de platine (410) qui s'étend dans l'espace circulaire délimité par le susdit élément de circuit imprimé (408).

26. Appareil selon la revendication 23, caractérisé en ce que les susdits moyens d'allumage consistent en au moins une électrode (409) qui s'étend à l'intérieur de la chambre de combustion (403), et en ce qu'au moins une partie du brûleur contenant les susdits moyens d'allumage est située dans une zone (411) isolée électriquement des circuits de mesure par une paroi (414) électriquement conductrice.

27. Appareil selon la revendication 26, caractérisé en ce que la susdite électrode (409) est connectée à un circuit d'alimentation comprenant un transformateur d'impulsions haute tension (416) situé dans la susdite zone (411), de préférence sur une partie du susdit élément de circuit imprimé (408) extérieure au brûleur, et en ce que les circuits basse et moyenne tension (415) du circuit d'alimentation sont isolés de la susdite zone par la susdite paroi (414).

28. Appareil selon la revendication 1, caractérisé en ce que la circulation d'air à l'intérieur du brûleur est assurée au moyen d'un circulateur (bloc 9') asservi en fonction de l'intensité du rayonnement ultraviolet émis par la combustion de l'hydrogène.

29. Appareil selon la revendication 28, caractérisé en ce qu'il comprend un détecteur apte à détecter les défauts de fonctionnement et des moyens permettant d'interrompre le circuit d'amorçage et d'entretien de la flamme (bloc 12) lorsque ce détecteur délivre un signal de défaut.

30. Appareil selon la revendication 1, caractérisé en ce que les susdits démodulateursséparateurs (241) sont pilotés par un signal de synchronisation émis par un détecteur (242) optique ou magnétique associé au disque rotatif (223), de manière à ce que chaque démodulateur ne traite que le signal correspondant à un filtre déterminé du disque (223).

31. Appareil selon la revendication 30, caractérisé en ce que les signaux issus de la susdite cellule optoélectronique (232) sont filtrés à l'aide d'au moins un filtre piloté par le susdit signal de synchronisation.

32. Appareil selon la revendication 31, caractérisé en ce que le susdit filtre est du type à découpage capacitif dont la fréquence de coupure est asservie à celle d'une base de temps (245) synchronisée sur la vitesse de rotation du disque (223).

33. Appareil selon la revendication 1, caractérisé en ce que les susdits moyens d'affichage (19) comprennent un système de signalisation émettant un signal lumineux ou sonore à amplitude et/ou fréquence variable.

**Patentansprüche**

1. Tragbares, unabhängiges Gerät zur Analyse einer Gaszusammensetzung unter Verwendung der Flammenspektralphotometrie, welches infolgedessen, in einem mit einen Griffteil versehenen Gehäuse Mittel aufweist zur spektrographischen Analyse der von einer Flamme erzeugten Ausstrahlung, wobei besagte Flamme durch Verbrennung eines Wasserstoffstromes konstanter Menge in einem zu analysierenden Luftstrom erzeugt wird und besagte Verbrennung in einem Brenner (220) stattfindet, der ein Fenster (221) aufweist, in dessen Achse eine Flammenspektrometrievorrichtung angeordnet ist, die nacheinander angeordnet enthält ;

– eine Fokussieroptik (222, 231) für die Lichtstrahlen, welche von der sich im Inneren des Brenners (220) entwickelnden Flamme abgegeben werden,

– einen Strahlenunterbrecher (223) mit einer Vielzahl von optischen Filtern (224), von denen mindestens einer in der charakteristischen Spektrallinie des gesuchten Elementes angeordnet ist, sowie Mittel, um besagte Filter (224) nacheinander in das vorher fokussierte Strahlenbündel einzusetzen,

– eine im Fokussierbereich der fokussierenden Optik (222, 231) angeordnete optoelektronische Detektorzelle (232),

– eine Demodulationseinheit für das von besagter Zelle (232) abgegebene elektrische Signal, wobei besagte Einheit für jede der Linien und somit für jeden der besagten Filter einen Demodulator/Separator (17) aufweist, welcher mit dem Unterbrecher synchron gesteuert wird, sodass er nur aktiviert wird, wenn das aus der Fokussieroptik kommende Strahlenbündel einen entsprechenden Filter durchquert, und

– Verstärker- und Anzeigemittel (19) für das von besagten Demodulatoren/Separatoren abgegebene elektrische Signal,

dadurch gekennzeichnet, dass man besagten Wasserstoffstrom mittels eines abnehmbaren Wasserstofferzeugers erhält, der aus einem Wasserstoffakkumulator (1) besteht, von der Art, in der man die Abgabe von Wasserstoff erreicht, indem man durch Erhitzungsmittel (29) wasserstoffimpregnierte, in einem austauschbaren Einsatz geringer Abmessung enthaltene Elemente erhitzt und besagter Einsatz mit dem Brenner durch einen Speisekreis verbunden ist, der eine Vorrichtung (2) zur konstanten Mengenregulierung aufweist und Mittel, um die Heizleistung des Wasserstoffakkumulators (1) vom oberhalb der besagten Mengenreguliervorrichtung (2) herrschenden Wasserstoffdruck abhängig zu machen.

2. Gerät nach Anspruch 1, dadurch gekennzeichnet,dass es für jede, einem gesuchten Element entsprechende Spektrallinie zwei aufeinanderfolgende Filter aufweist, wovon einer das Fussende der besagten Linie und der andere das Kopfende der besagten Linie erfasst.

3. Gerät nach Anspruch 1, dadurch gekennzeichnet, dass besagter Wasserstoffakkumulator einen rohrförmigen Körper (25) aufweist, der mit einer Vielzahl von radialen, sich axial ins Innere des das Lanthan-Nickel enthaltenden Körpers (25) erstreckenden Rippen (26) versehen ist.

4. Gerät nach Anspruch 3, dadurch gekennzeichnet, dass besagter Körper einen mit einem Pfropfen (27), vezrsehenen Boden aufweist, und besagter Pfropfen herausgetrieben wird, wenn der Wasserstoffdruck im Inneren des Körpers einen bestimmten Schwellenwert übersteigt.

5. Gerät nach Anspruch 1, dadurch gekennzeichnet, dass besagte Erhitzungsmittel aus aktiven, von einer Steuerspannung gesteuerten Teilen des CMS-Typs (29) bestehen.

6. Gerät nach Anspruch 1, dadurch gekennzeichnet, dass der oberhalb der Mengenreguliervorrichtung (9) angeordnete Teil des Wasserstoffkreises so ausgelegt ist, dass er ein Puffervolumen bildet, in dem der Wasserstoffdruck oberhalb eines Schwellenwertes variieren kann, innerhalb eines Bereiches, der dem vom Regler (9) benötigten Druck entspricht, um die Wasserstoffabgabe konstant zu halten und dass besagte Reguliermittel so ausgelegt sind, dass sie den im Inneren des besagten Raumes herrschenden Wasserstoffdruck in diesem Bereich halten, indem sie, dauernd oder von Zeit zu Zeit, die in die Erhitzungsvorrichtung des besagten Akkumulators (1) eingespeiste elektrische Leistung steuern.

7. Gerät nach Anspruch 1, dadurch gekennzeichnet, dass besagte Mengenregelvorrichtung (9) in Reihe ein Druckregelventil mit einer Membran und einen Mengenregler aufweist.

8. Gerät nach Anspruch 7, dadurch gekennzeichnet, dass der in besagtem Raum herrschende Wasserstoffdruck mittels eines Detektors (108), welcher die Position der Membran (104) des Druckreduzierventils ermittelt, gemessen wird.

9. Gerät nah Anspruch 1, dadurch gekennzeichnet, dass besagte Mengenregelvorrichtung einen Hohlkörper (80) aufweist, mit zwei gegenüberliegenden koaxialen Öffnungen, das heisst einer Zugangsöffnung (87) zum Anschluss an den Wasserstoffakkumulator (1) und eine an den Brenner angeschlossene Austrittsöffnung (88), sowie eine innere, senkrecht zur Achse der besagten Öffnungen (87, 88) angeordnete Zwischenwand (100), die im Körper zwei Kammern (C1, C2) abgrenzt, deren eine, auf der Seite der Zugangsöffnung (87) angeordnete, (C1), die Kammer des Druckreduzierventils bildet und deren andere, auf der Seite der Austrittsöffnung (88) angeordnete (C2) die Kammer des Durchflussreglers bildet und die Verbindung zwischen besagten beiden Kammern (C1, C2) durch eine, in der Zwischenwand (100) koaxial zu besagten Öffnungen (87, 88) vorgesehene Bohrung (101) erfolgt.

10. Gerät nach Anspruch 9, dadurch gekennzeichnet, dass besagte Zugangsöffnung (87) mit einer Nadel (91) versehen ist, die einen axialen Kanal (93) aufweist und deren Kopf (96), der ins Innere der Kammer (C1) der Reguliervorrichtung hineinragt, mit einer Klappe (107) zusammenarbeitet, die von einer Trägervorrichtung getragen wird, welche fest mit einer elastisch verformbaren Membran (104) verbunden ist und besagte Membran hermetisch auf den Körper (80) und die Nadel (91) montiert ist und sich in einer zur Achse der besagten Öffnungen (87, 88) senkrechten Ebene erstreckt und so die Kammer (C1) des Regulators in zwei hermetisch gegeneinander isolierte Hohlräume (102, 103) unterteilt, deren erster (102) mit der Aussenluft in Verbindung steht und deren zweiter (103), durch den Kanal (93) der Nadel (91) mit Wasserstoff versorgter Hohlraum mit der Kammer (C2) des Durchflussreglers durch die Bohrung (101) der besagten Zwischenwand (100) in Verbindung steht.

11. Gerät nach Anspruch 10, dadurch gekennzeichnet, dass eine mit der membran (104) fest verbundene Dichtfläche mit einer um die Bohrung (101) herum vorgesehen Dichtfläche zusammenarbeitet, um besagte Bohrung zu schliessen, wenn der Druck im zweiten Hohlraum (103) einen bestimmten Schwellenwert unterschreitet.

12. Gerät nach Anspruch 10, dadurch gekennzeichnet, dass besagte Austrittsöffnung (88) mit einer Nadel (92) versehen ist, welche einen axialen Kanal (94) aufweist und deren Kopfteil (97) mit einer Klappe (116) zusammenarbeitet, welche von einer elastisch verformbaren Membran (112) getragen wird, die die Regulierkammer (2) in zwei hermetisch gegeneinander isolierte Hohlräume (110, 111) unterteilt, deren einer (110) mit der mittleren Bohrung (101) der besagten Trennwand (100) in Verbindung steht und deren anderer (111) mit dem Kanal (94) der Austrittsnadel (92) in Verbindung steht, und dass die Verbindung zwischen den beiden Hohlräumen (110, 111) durch ein Unterdruck erzeugendes, von einer Kapillare (117) gebildetes Element erfolgt, welches durch die Membran (112) reicht und sich mindestens teilweise radial in einen der beiden hohlräume erstreckt.

13. Gerät nach Anspruch 12, dadurch gekennzeichnet, dass die Axialposition der besagten Nadeln (91, 92) durch Schrauben einstellbar ist.

14. Gerät nach Anspruch 1, dadurch gekennzeichnet, dass besagte Filter (224) von einer drehbaren Scheibe (223) getragen werden, die ausserdem einen Ultraviolettfilter (228) aufweist, dem eine entsprechende optoelektronische Zelle (230) zugeordnet ist, zur Abgabe eines für das Vorhandensein und die leuchtkraft der Flamme typischen Signals.

15. Gerät nach Anspruch 14, dadurch gekennzeichnet, dass besagter Ultraviolettfilter (228) einem Reflektor (227) zugeordnet ist, welcher die ultravioletten Strahlen in die Ebene der Scheibe (223) zurückwerfen kann.

16. Gerät nach Anspruch 14, dadurch gekennzeichnet, dass es eine von besagtem Signal gesteuerte Flammenzündvorrichtung aufweist.

17. Gerät nach Anspruch 16, dadurch gekennzeichnet, dass besagte Zündvorrichtung mit Thermokatalyse arbeitet.

18. Gerät nach Anspruch 16, dadurch gekennzeichnet, dass besagte Zündvorrichtung Mittel zur Erzeugung eines elektrischen Lichtbogens im Brenner aufweist.

19. Gerät nach Anspruch 1, dadurch gekennzeichnet, dass der Strahlenunterbrecher (223) zwischen den optischen Filtern (224) mindestens einen optisch dichten Bereich, welcher die Oberfläche eines Filters hat, aufweist und besagter Bereich dazu dient, ein für die Nullichtintensität typisches Referenzsignal zu erhalten.

20. Gerät nach Anspruch 1, dadurch gekennzeichnet, dass besagte Fokussieroptik mindestens eine Linse (231) aufweist, welche zwischen zwei Gittern (233) aus elektrisch leitendem Material angeordnet ist, die als elektrostatischer Schirm dienen.

21. Gerät nach Anspruch 20, dadurch gekennzeichnet, dass besagte Fokussieroptik einen dichroitischen Filter oder eine Metallbeschichtung der Linse (231) aufweist, um die infraroten Strahlen aufzuhalten und besagten elektrostatischen Schirm zu bilden.

22. Gerät nach Anspruch 1, dadurch gekennzeichnet, dass besagte photoelektrische Zelle aus einer Photodiode (35) besteht, die an die beiden Invertereingänge von zwei Operationsverstärkern (36, 37) angeschlossen ist, deren direkte Eingänge geerdet sind, dass die Invertereingänge eines jeden Verstärkers durch einen Widerstand (R) an ihre Ausgänge angeschlossen sind und dass das Ausgangssignal aus der Spannung zwischen den beiden Ausgangsklemmen der besagten Verstärker besteht.

23. Gerät nach Anspruch 1, dadurch gekennzeichnet, dass der Brenner einen zylindrischen Körper aus zwei miteinander verbundenen Teilen (401, 402) aufweist, und, in Höhe der Verbindung zwischen besagten beiden Teilen, ein kranzförmiges gedruktes Schaltkreiselement (408), welches die sich ins Innere der Brennkammer (403) des Brenners erstreckenden Zündmittel trägt.

24. Gerät nach Anspruch 23, dadurch gekennzeichnet, dass besagtes gedrucktes Schaltkreiselement (408) mindestens einen Teil (409') der Speiseschaltung für besagte Zündmittel trägt.

25. Gerät nach Anspruch 23, dadurch gekennzeichnet, dass besagte Zündmittel aus einem Platindraht (410) bestehen, der sich in den vom besagten gedruckten Schaltkreislement (408) begrenzten kreisförmigen Raum erstreckt.

26. Gerät nach Anspruch 23, dadurch gekennzeichnet, dass besagte Zündmittel aus mindestens einer, sich ins Innere der Brennkammer (403) erstreckenden Elektrode (409) bestehen und dass midestens ein Teil des Brenners, welcher besagte Zündmittel enthält, in einem Bereich (411) angeordnet ist, der durch eine elektrisch leitende Wand (414) elektrisch von den Messkreisen isoliert ist.

27. Gerät nach Anspruch 26, dadurch gekennzeichnet, dass besagte Elektrode (409) an einen Speisekreis angeschlossen ist, der einen, in besagtem Bereich (411) vorzugsweise auf einem Abschnitt des besagten gedruckten Schaltkreiselementes (408) ausserhalb des Brenners gelegenen Hochspannungsimpulstransformator (416) enthält und dass die Niederspannungs- und Mitellspannungskreise (415) des Speisekreises im Verhältnis zum besagten Bereich durch die besagte Wand (414) isoliert sind.

28. Gerät nach Anspruch 1, dadurch gekennzeichnet, dass die Luftzirkulation innerhalb des Brenners durch eine Umwälzvorrichtung (Block 9') erfolgt, die im Verhältnis zur Intensität der von der Wasserstoffverbrennung erzeugten ultravioletten Ausstrahlung geregelt wird.

29. Gerät nach Anspruch 28, dadurch gekennzeichnet, dass es einen Detektor zur Erfassung von Betriebsstörungen aufweist und Mittel, um den Zündkreis und den Kreis zur Aufrechterhaltung der Flamme (Block 12) zu unterbrechen, wenn der Detektor ein Störungssignal abgibt.

30. Gerät nach Anspruch 1, dadurch gekennzeichnet, dass die Demodulatoren/Separatoren (241) von einem Synchronisiersignal gesteuert werden, welches von einem optischen oder magnetischen, der drehbaren Scheibe (223) zugeordneten Detektor (242) abgegebenen wird, sodass jeder Demodulator/Separator nur das einem bestimmten Filter der Scheibe (223) entsprechende Signal verarbeitet.

31. Gerät nach Anspruch 30, dadurch gekennzeichnet, dass die von der besagten optoelektronischen Zelle (232) abgegebenen Signale von midestens einem, von besagtem Synchronisiersignal gesteuerten Filter gefiltert werden.

32. Gerät nach Anspruch 31, dadurch gekennzeichnet, dass besagter Filter ein kapazitiver Sampler ist, dessen Samplefrequenz von einer mit der Drehgeschwindigkeit der Scheibe (223) synchronisierten Zeitbasis (245) geregelt wird.

33. Gerät nach Anspruch 1, dadurch gekennzeichnet, dass besagte Anzeigemittel (19) ein Signalisiersystem aufweisen, welches ein Lichtsignal oder ein akustisches Signal variabler Amplitude und/oder Frequenz abgibt.

## Claims

1. A portable self-contained apparatus for the analysis of a gaseous composition by flame spectrophotometry, this apparatus consequently comprising inside a case fitted with a gripping member, means for carrying out a spectrographic analysis of the radiation produced by a flame obtained by the combustion of a constant flow rate hydrogen stream in a flow of air to be analyzed, said combustion being generated in a burner (220) comprising a window (221) in the axis of which is disposed a spectrometry device which comprises successively :
   – an optical system (222, 231) for focusing the light radiation emitted by the flame which is developed inside the burner (220),
   – a chopper (223) including a plurality of optical filters (224) at the rate of at least one per characteristic spectral line of the sought element, as well as means for placing said filters (224) successively in the previously focused light beam,
   – an optoelectronic detection cell (232) placed in the focusing zone of the focusing optics (222, 231),
   – an assembly for demodulating the electric signal delivered by said cell (232), this assembly comprising for each of said spectral lines and, consequently, for each of said filters, a demodulator-separator (17) driven in synchonism with the chopper so as to be made active only when the light beam from the focusing optics passes through a corresponding filter, and
   – means (19) for amplifying and displaying the electric signal delivered by said demodulator-separators (17),
characterized in that said hydrogen flow is obtained by a removable hydrogen generator consisting of a hydrogen accumulator (1) of the type in which hydrogen is released by heating, with heating means (29), of hydrogen-impregnated elements contained in an interchangeable cartrige of small volume, in that said cartridge is connected to the burner by means of a supply circuit comprising a flow regulator device (2) with constant flow, and in that it comprises means for making the heating power of the hydrogen accumulator (1) dependent on the hydrogen pressure reigning upstream of said flow regulator device (2).

2. The apparatus as claimed in claim 1, characterized in that, or each spectral line corresponding to a desired element, it comprises two successive filters, one detecting the foot of this line and the other for detecting the top of this line.

3. The apparatus as claimed in claim 1, characterized in that said hydrogen accumulator comprises a body (25) of tubular shape having a plurality of radial fins (26) which extend axially in the inner volume of the body (25) containing the lanthanum-nickel.

4. The apparatus as claimed in claim 3, characterized in that said body comprises a bottom having a stopper (27) which is ejected when the hydrogen pressure inside the body rises above the given threshold.

5. The apparatus as claimed in claim 1, characterized in that said heating means consist of active components (29) of the type CMS controlled by a control voltage.

6. The apparatus as claimed in claim 1, characterized in that the said part of the hydrogen circuit situated uipstream of the flow regulator (9) forms a buffer volume in which the hydrogen pressure may vary above a threshold value in a pressure range appropriate to that required by the regulator (9) so as to maintain the hydrogen flow constant , and in that the said servo-control means are adapted for maintaining the hydrogen pressure reigning inside said volume within said pressure range by continuously or discontinuously adjusting the electric power applied to the heating device of said accumulator (1).

7. The apparatus as claimed in claim 1, characterized in that said flow regulator device (9) comprises in series a membrane pressure reducer and a flow regulator.

8. The apparatus as claimed in claim 7, characterized in that the hydrogen pressure reigning in said volume is detected by means of a detector (108) detecting the position of the membrane (104) of the pressure reducer.

9. The apparatus as claimed in claim 1, characterized in that said flow regulator device comprises a hollow body (80) with two opposite coaxial orifices, namely an access orifice (87) for connecting to the hydrogen accumulator (1) and an outlet orifice (88) connected to the burner and an internal dividing wall (100) perpendicular to the axis of said orifices (87, 88), which defines two chambers (C1, C2) inside the body, one of which (C1), situated on the access orifice (87) side, forms the chamber of the pressure reducer and the other (C2), situated on the outlet orifice (88) side, forms the chamber of the flow regulator, communication between these two chambers (C1, C2) taking place through a bore (101) provided in the dividing wall (100) coaxially to said orifices (87, 88).

10. The apparatus as claimed in claim 9, characterized in that the said access orifice (87) is equipped with a needle (91) having an axial channel (93) and whose head (96) which projects inside the chamber (C1) of the flow regulator, cooperates with a valve (107) carried by a support structure secured to a resiliently deformable membrane (104) which is sealingly mounted on the body (80) and on the needle (91) and extends in a plane perpendicular to the axis of said orifices (87, 88) and divides the chamber (C1) of the flow regulator into two cavities (102, 103) hermetically isolated from each other and the first of which (102) communicates with the atmosphere and the second (103), fed with hydrogen through the channel (93) of the needle (91) communicates with the chamber (C2) of the flow regulator through the bore (101) in said dividing wall (100).

11. The apparatus as claimed in claim 10, characterized in that a sealing surface forming part of the membrane (104) cooperates with a sealing surface provided about the bore (101), so as to close this bore when the pressure in the second cavity (103) drops below a predetermined threshold.

12. The apparatus as claimed in claim 10, characterized in that said outlet orifice (88) is equipped with a needle (92) having an axial channel (94) whose head (97) cooperates with a valve (116) carried by a resiliently deformable membrane (112) which divides the regulation chamber (C2) into two cavities (110, 111) hermetically isolated from each other, one of which (110) communicates with the central bore (101) in said dividing wall (100) and the other (111) communicates with the channel (94) of the outlet needle (92), and in that communication between these two cavities (110, 111) is then provided by a vacuum producing element formed by a capillary (117) passing through the membrane (112) and one part at least of which extends radially into one of the two cavities.

13. The apparatus as claimed in claim 12, characterized in that the axial position of said needles (91, 92) is adjustable by screwing.

14. The apparatus as claimed in claim 1, characterized in that said filters (224) are carried by a rotary disk (223) further comprising an ultraviolet filter (228) associated with a corresponding optoelectronic cell (230) intended to supply a signal representative of the presence and of the light intensity of the flame.

15. The apparatus as claimed in claim 14, characterized in that said ultraviolet filter (228) is associated with a reflector (227) for reflecting the ultraviolet radiation in the plane of the disk (223).

16. The apparatus as claimed in claim 14, characterized in that it comprises a device for igniting the flame driven by said signal.

17. The apparatus as claimed in claim 16, characterized in that said ignition device operates by thermocatalysis.

18. The apparatus as claimed in claim 16, characterized in that said ignition device comprises means for generating an electric arc inside the burner.

19. The apparatus as claimed in claim 1, characterized in that the chopper (223) comprises, between said optical filters (224), at least one opaque region having the surface of a filter, this region serving for obtaining a reference signal representative of a zero light intensity.

20. The apparatus as claimed in claim 1, characterized in that said focusing optics include at least one lens (231) interposed between two grids (233) made from an electrically conducting material serving as electrostatic screen.

21. The apparatus as claimed in claim 20, characterized in that said focusing optics include a dichroic filter or a metallization of the lens (231) for stopping the infrared radiation and achieving said electrostatic screening.

22. The apparatus as claimed in claim 1, characterized in that said photoelectric cell consists of a photodiode (35) connected to the two inverting inputs of two respctive operational amplifiers (36, 37) whose forward inputs are connected to ground, and in that the inverting inputs of each of these amplifiers are corrected to their output by means of a resistor (R) and in that the output signal consists of the voltage between the two output terminals of said amplifiers.

23. The apparatus as claimed in claim 1, characterized in that the burner comprises a cylindrical body made of two parts (401, 402) assembled together with, at the junction between these two parts, a printed circuit element (408) in the form of a ring having ignition means which extend inside the combustion chamber (403) of the burner.

24. The apparatus as claimed in claim 23, characterized in that said printed circuit element (408) carries at least one part (409′) of the supply circuit for said ignition means.

15. The apparatus as claimed in claim 23, characterized in that said ignition means consist of a platinum wire (410) which extends into the circular space defined by said printed circuit element (408).

16. The apparatus as claimed in claim 23, characterized in that said ignition means consist of at least one electrode (409) which extends inside the combustion chamber (403) and in that at least a part of the burner containing said ignition means is situated in a zone (411) isolated electrically from the measuring circuits by an electrically conducting wall (414).

27. The apparatus as claimed in claim 26, characterized in that said electrode (409) is connected to a supply circuit comprising a high voltage pulse transformer (416) situated in said zone (411), preferably on a part of said printed circuit element (408) external to the burner, and in that the low and medium voltage circuits (415) of the supply circuit are isolated from said zone by said wall (414).

28. The apparatus as claimed in claim 1, characterized in that the flow of air inside the burner is provided by a circulator (block 9′) controlled as a function of the intensity of the ultraviolet radiation emitted by combustion of the hydrogen.

29. The apparatus as claimed in claim 28, characterized in that it comprises a detector for detecting the malfunctions and means for interrupting the circuit for igniting and maintaining the flame (block 12) when this detector delivers a fault signal.

30. The apparatus as claimed in claim 1, characterized in that said demodulator-separator means (241) are driven by a synchronization signal emitted by an optical or magnetic detector (242) associated with the rotary disk (223) so that each demodulator only processes the signal corresponding to a given filter of the disk (223).

31. The apparatus as claimed in claim 30, characterized in that the signals delivered by said optoelectronic cell (232) are filtered by means of at least one filter driven by said synchronization signal.

32. The apparatus as claimed in claim 31, characterized in that said filter is of the capacitive chopping type whose breaking frequency is slaved to that of a time base (245) synchronized with the rotational speed of the disk (223).

33. The apparatus as claimed in claim 1, characterized in that said display means (19) include a signalling system emitting a light or sound signal with variable amplitude and/or frequency,

FIG.1

FIG. 2

FIG.3

FIG.4

# FIG.5

# FIG.6

# FIG.7

# FIG.8

## FIG. 9

404

406

405

407

409′

408

401

402

409

<u>403</u>

## FIG. 10

410

408

# FIG.11

412

15KV

416

408

400V

413

414

411

415

5V

400V

417

EP 0 305 435 B1